Europäisches Patentamt

European Patent Office

Office européen des brevets

(11) Veröffentlichungsnummer: **0 114 063**
**A2**

(12) # EUROPÄISCHE PATENTANMELDUNG

(21) Anmeldenummer: **84100247.0**

(51) Int. Cl.³: **A 22 B 3/06**, A 22 B 5/00

(22) Anmeldetag: **11.01.84**

(30) Priorität: **13.01.83 DE 3300977**

(71) Anmelder: **Riniker AG, CH-5102 Rupperswil (CH)**

(72) Erfinder: **Riniker, Hans, Höhenweg 2, CH-5102 Rupperswil (CH)**

(43) Veröffentlichungstag der Anmeldung: **25.07.84 Patentblatt 84/30**

(74) Vertreter: **Dipl.-Phys.Dr. Manitz Dipl.-Ing. Finsterwald Dipl.-Ing. Grämkow Dipl.-Chem.Dr. Heyn Dipl.-Phys.Rotermund Morgan B.Sc.(Phys.), Robert-Koch-Strasse 1, D-8000 München 22 (DE)**

(84) Benannte Vertragsstaaten: **AT CH DE FR LI NL**

(54) **Anlage zur Betäubung von Schweinen.**

(57) Es wird eine Anlage zur Betäubung von Schweinen beschrieben, die aus einer zur taktweisen Aufnahme von Schweinen bestimmten Falle, einer in der Falle integrierten Station zur elektrischen Betäubung und einer Fördervorrichtung besteht, mittels der in die Falle getriebene Tiere erfasst und auf einen in normaler Arbeitshöhe angeordneten Fesseltisch ausgeworfen werden können.

ACTORUM AG

## Anlage zur Betäubung von Schweinen

Die Erfindung betrifft eine Anlage zur Betäubung von Schweinen, bestehend aus einer auf einen Treibgang folgenden, zur taktweisen Aufnahme von Schweinen bestimmten Falle sowie einer an den Kopf des jeweiligen Schweines anlegbaren Elektrodenanordnung.

Es ist bereits bekannt, Schweine in Tötebuchten oder Fallen mittels Elektrodenzangen zu betäuben. Diese Art des elektrischen Betäubens, bei der der Schweinekopf jeweils mit der Zange erfaßt werden muß, ist mit starken physischen und psychischen Belastungen der die Zangen bedienenden Personen und häufig auch mit schlechten Betäubungsergebnissen sowie durch Blutungen bedingter schlechterer Fleischqualität verbunden.

Es ist auch bereits eine Anlage zur automatischen Betäubung von Schweinen bekannt, bei der die Schweine mittels eines Restrainers erfaßt und zwischen den Restrainerbändern festgehalten zu einer Betäubungsstation transportiert werden, in der der Kopf der Schweine mit Elektroden in Berührung kommt, die in den Transportweg ragen und die automatische Betäubung gewährleisten. Diese Anlagen haben sich in der Praxis bewährt und zeichnen sich durch hohe Leistungsfähigkeit aus.
Nachteilig sind die hohen Kosten einer derartigen automatischen Betäubungsanlage sowie der große Platzbedarf, der den Einbau derartiger Anlagen in manchen Fällen zumindest erschwert oder den Bau neuer Gebäude erforderlich macht.

Aufgabe der Erfindung ist es, eine Anlage der eingangs angegebenen Art bei für die Praxis im Regelfall ausreichender Leistungsfähigkeit besonders kompakt auszugestalten, trotz einfachen Aufbaus hohe Betriebssicherheit in Verbindung mit vergleichsweise niedrigen Kosten zu gewährleisten und eine problemfreie Bedienung sicherzustellen.

Gelöst wird diese Aufgabe nach der Erfindung dadurch, daß in der Falle eine die einzeln eingeschleusten Schweine erfassende Klappen- oder Mitnehmeranordnung sowie eine Betäubungsstation mit bezüglich des Schweinekopfes zentrier- und insbesondere sensorgesteuert am Kopf anlegbaren Elektroden vorgesehen sind, und daß das betäubte Schwein mittels einer Auswurfeinheit zu einem seitlich der Falle und in normaler Arbeitshöhe angeordneten Fesseltisch bzw. einem Entblute-Wanderrost überführbar ist.

Von besonderer Bedeutung ist im Rahmen der Erfindung, daß sich durch die Verwendung des Fallenprinzips in Verbindung mit einer insbesondere sensorgesteuerten Elektrodenanordnung eine wesentliche Verringerung des Platzbedarfs der Anlage ergibt und bei dem jeweils auf den Betäubungsvorgang erfolgenden Auswurfvorgang das jeweilige Tier auf einen eine normale Arbeitshöhe besitzenden Tisch gelangt und somit die Weiterverarbeitung schnell und problemlos erfolgen kann. Desweiteren ist von Bedeutung, daß die Tiere nicht über eine längere Zeitspanne eingeklemmt, sondern lediglich mittels einer Klappenanordnung untergriffen werden, so daß sich eine schonende, die Auslösung von Angsteffekten vermeidende Erfassung der Tiere und deren notwendige Positionierung erreichen läßt.

Vorzugsweise ist die Klappenanordnung zwischen einer Erfassungsposition im Bereich des Fallenbodens und einer Auswerfposition oberhalb von Fesseltisch bzw. Entblute-Wanderrost verfahrbar, wobei der Betäubungsvorgang gemäß einer Ausführungsvariante der Erfindung unmittelbar nach dem Erfassen des Tieres durch die Klappenanordnung erfolgen und dann der Auswurfvorgang durchgeführt werden kann.

Gemäß einer Ausgestaltung der Erfindung ist die Klappenanordnung mit einer Hub- und/oder Kippvorrichtung verbunden. Im Falle der Verwendung einer Hubvorrichtung wird bevorzugt eine Auswurfklappe in den Fallenraum eingeschwenkt, über die das betäubte Tier nach Öffnen der Klappenanordnung durch Schwerkraft auf den Fesseltisch rutscht.

Im Falle der Verwendung einer Kippvorrichtung kann die erwähnte Auswurfklappe entfallen, da das betäubte Tier unmittelbar und rücklings durch die Klappenanordnung auf den Fesseltisch transportiert wird. Das Schwein kann dann mühelos gefesselt und an einen Elevator gehängt werden. Der Stichvorgang kann bereits bei noch auf dem Fesseltisch liegendem Schwein aber auch anschließend an einer Blutebahn oder einem Stechkarussell vorgenommen werden.

Die Halteklappen sind vorteilhafterweise der Tierkörperform angepaßt und bestehen aus einem wärmeisolierenden Material oder sind mit einem entsprechenden Überzug versehen, so daß sich eine schonende Fixierung des Tieres ergibt und jegliche Verkrampfung des Tieres durch plötzliche Kälteeinwirkung vermieden wird. Diese Halteklappen können auch aus elastisch nachgiebigem Kunststoffmaterial bestehen, das sich der Tierkörperform anpaßt.

Bei der Ausführungsform der Erfindung, bei der der Fallenboden nach dem Erfassen des Tieres in der Betäubungsstation mittels der Halteklappen wieder abgesenkt und in die Ausgangsstellung zurückgeführt wird, ist es möglich, eine erwünschte Kapazitätssteigerung der Anlage zu erreichen, da die Fallentürverriegelung sofort freigegeben werden kann, wenn der Boden seine untere Endstellung erreicht hat und damit das nächste Tier bereits in die Falle getrieben werden kann, während in der darüberliegenden Betäubungsstation der Auswurfvorgang in die Wege geleitet wird. In diesem Zusammenhang ist es von Vorteil, die Absenkgeschwindigkeit des Fallenbodens größer zu wählen als die Hubgeschwindigkeit.

Besonders bewährt haben sich in der Praxis jedoch diejenigen Ausführungsformen der Erfindung, bei denen das Tier bereits unmittelbar nach dem Eintreiben in die Falle von der Klappenanordnung erfaßt wird. In Abhängigkeit von der dann vorgesehenen Auswerfeinrichtung kann bei einem anschließenden Anhebevorgang der Fallenboden sowie der die Falle verschließende Gitterrost die Hebbewegung der Klappenanordnung mitmachen oder stationär bleiben.

Die Elektroden sind bevorzugt verstellbar an einem Betäubungsschlitten angebracht und über den Betäubungsschlitten sowohl horizontal als auch vertikal verfahrbar. Durch die Verstellbarkeit der Elektroden kann eine bestmögliche Anpassung an die Schweinegröße und an die Schweinerassen erfolgen.

Die Bewegung der Elektroden ist durch eine Abtastvorrichtung in Abhängigkeit von der Kopfposition des Schweines steuerbar, wobei die Abtastvorrichtung ein automatisches Anvisieren der Kopfposition gewährleistet, was durch eine pneumatische Steuerung oder durch eine elektrische oder elektronische Steuerung mittels Sensoren erreichbar ist.

Die elektrische Zuschaltung der Elektroden und damit die Auslösung des Betäubungsvorganges erfolgt in Abhängigkeit vom Ergebnis einer Messung des Widerstandes zwischen den mit einstellbarem Druck am Schweinekopf anliegenden Elektroden. Die Betäubungsspannung und die Betäubungszeit ist dabei einstellbar.

Nach einer Ausführungsvariante der Erfindung besteht der Förderer aus zwei die Seitenwände der Falle bildenden und mit gegenseitig ausgerichteten, den Schweinekörper untergreifenden Mitnehmern versehenen Vertikal-Endlosförderern. Mittels dieser Förderer kann eine Leistungssteigerung erzielt werden, da nach dem Anheben eines Schweines auf eine bestimmte Höhe bereits das nächstfolgende Schwein in die Falle einlaufen kann. Mittels dieser Förderer kann ein kontinuierlicher, jedoch auch ein intermittierender Betrieb der Anlage vorgesehen werden.

Bevorzugt besitzt der auf der Seite des Auswurftisches gelegene Vertikal-Endlosförderer eine geringere Höhe als der ihm gegenüberliegende Förderer, so daß sich nach erfolgter Betäubung bei einem weiteren Anheben des Tierkörpers automatisch und zwangsläufig ein Auswerfen über den geringere Höhe aufweisenden Vertikalförderer ergibt. Dieser Auswurfeffekt kann bei gleichhohen Förderern auch dadurch erreicht werden, daß die Anlage bezüglich der Vertikalen schräg angeordnet wird.

Die Erfindung wird nachfolgend anhand von Ausführungsbeispielen unter Bezugnahme auf die Zeichnung näher erläutert; in der Zeichnung zeigt:

Fig. 1    eine schematische Draufsicht einer Anlage
          nach der Erfindung,

Fig. 2    eine schematische Aufrißdarstellung der bei
          der Anlage nach Fig. 1 verwendeten Falle mit
          integrierter Betäubungsstation,

Fig. 3    eine schematische Darstellung einer Variante
          der Falle nach Fig. 2,

Fig. 4 eine schematische Aufrißdarstellung einer Variante der bei der Anlage nach Fig. 1 zu verwendenden Falle mit integrierter Betäubungsstation, und

Fig. 5 eine schematische Darstellung einer weiteren Ausführungsform der Erfindung.

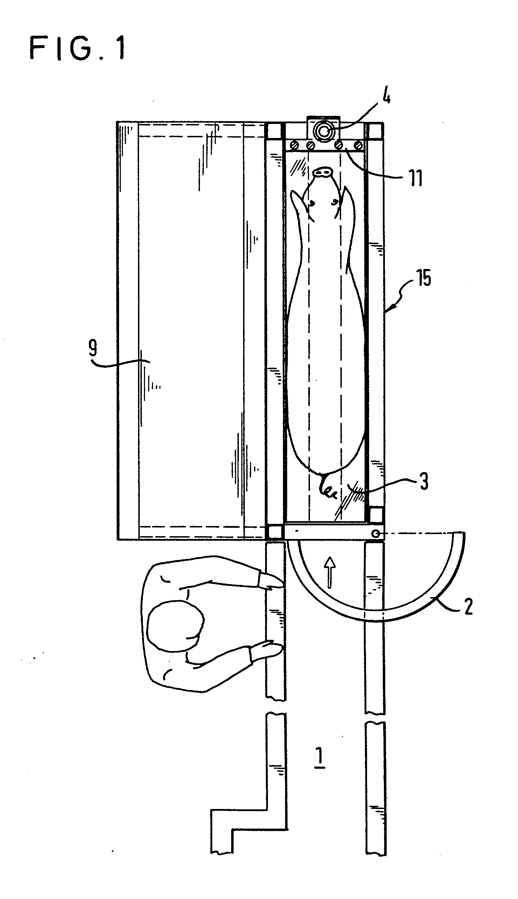

Nach Fig. 1 schließt sich an einen Treibgang 1 praktisch als Fortsetzung dieses Treibgangs eine über eine Schwenk-, Hub- oder Drehtür 2 zugängliche Falle 15 an, die stirnseitig mit einer Gitterwand 11 verschlossen ist, so daß ausreichend Licht in die Falle eindringen kann, was dazu führt, daß die Tiere leichter und mit weniger Streß in die Falle marschieren.

Seitlich neben der Falle 15 ist in normaler Arbeitshöhe ein Fesseltisch 9 angeordnet, auf den das jeweilige Tier nach erfolgter Betäubung geworfen wird.

Der Boden 3 der Falle ist zusammen mit der Gitterwand 11 über eine Hubvorrichtung 4 anheb- und absenkbar.

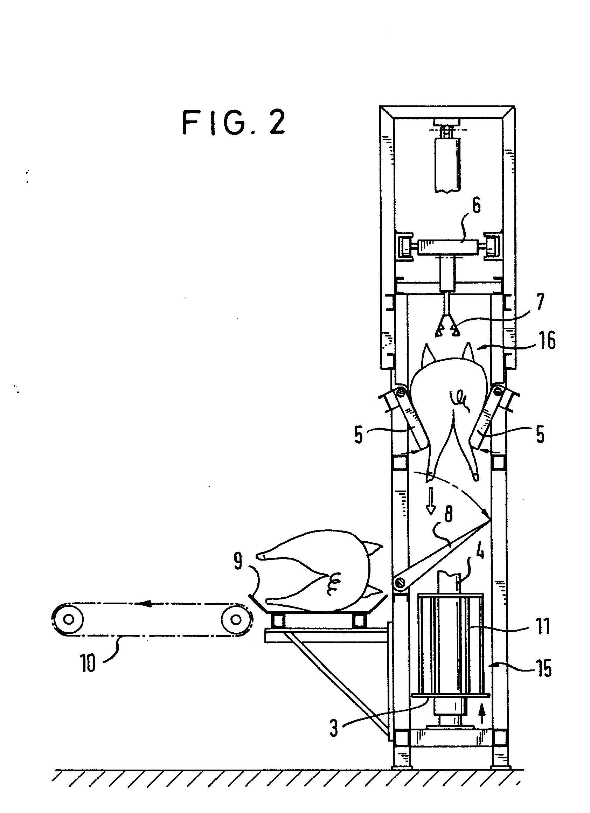

Fig. 2 zeigt den Boden 3 mit der Gitterwand 1 sowie in Teildarstellung die zugehörige Hubvorrichtung 4. Durch Anheben des Bodens 3 kann ein in die Falle getriebenes Tier ohne streßerzeugendes Einklemmen zu einer im oberen Bereich der Falle angeordneten Betäubungsstation 16 angehoben werden. In dieser Betäubungsstation 16 sind einschwenkbare Halteklappen 5 vorgesehen, welche das Tier beidseitig untergreifen und schonend fixieren.

Sobald die Halteklappen 5 das Tier erfaßt haben, kann der Fallenboden 3 wieder abgesenkt werden, so daß nach Erreichen seiner unteren Endposition bereits wieder das nächste Tier in die Falle getrieben werden kann.

In der Betäubungsstation 16 sind bezüglich des Schweinekopfes zentrier- und insbesondere sensorgesteuert am Kopf anlegbare Elektroden 7 vorgesehen, die vorzugsweise verstellbar an einem Betäubungsschlitten 6 angebracht und über diesen Schlitten horizontal sowie vertikal verfahrbar sind. Durch geeignete Steuerung ist sichergestellt, daß die eine Art Zange bildenden Elektroden sich automatisch auf die gewünschte Betäubungsstelle senken. Sobald die Zange mit einstellbarem Druck am Kopf aufliegt und der geforderte Widerstand gemessen wird, kann der Betäubungsstrom zugeschaltet werden, was in Abhängigkeit von der erwähnten Widerstandsmessung automatisch erfolgt.

Eine in der Seitenwand der Falle schwenkbar gelagerte Auswurfklappe wird nach erfolgter Fixierung des Tieres mittels der Halteklappen 5 und nach dem Zurückführen des Fallenbodens in seine untere Ausgangsposition so in den Fallenraum eingeschwenkt, daß sich unterhalb der Halteklappen 5 eine unmittelbar zum Fesseltisch 9 führende Schrägrutsche ergibt.

Wenn daher nach erfolgter Betäubung des Tieres die Halteklappen zurückgeschwenkt werden, fällt das Tier auf die Schrägrutsche 8 und gelangt damit allein durch Schwerkraftwirkung auf den Fesseltisch 9. Jetzt kann die Auswurfklappe 8 zurückgeschwenkt und der nächste Anhebevorgang eingeleitet werden.

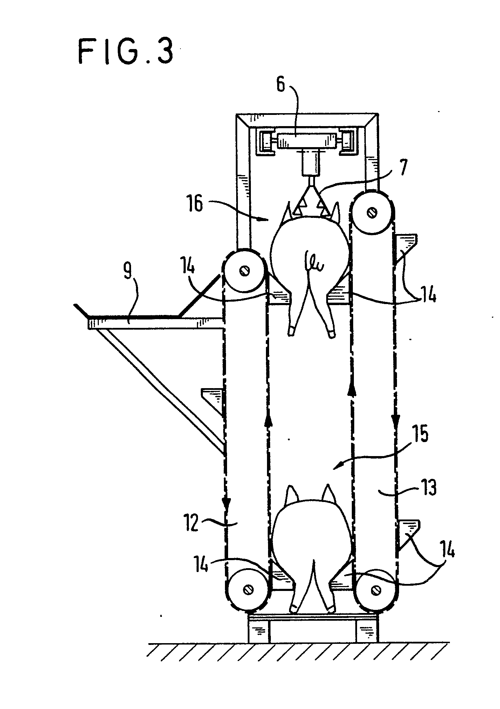

Bei der in Fig. 3 gezeigten Ausführungsvariante sind anstelle des anheb- und absenkbaren Fallenbodens zwei die Seitenwände der Falle 15 bildende Vertikal-Endlosförderer 12, 13 vorgesehen. An diesen Endlosförderern 12, 13 sind Mitnehmer 14 befestigt, die gegenseitig ausgerichtet sind und im Verlauf ihrer Bewegung den Körper eines sich in der Falle befindenden Schweines untergreifen und diesen dann wiederum unter Vermeidung von Klemmeffekten nach oben zur Betäubungsstation 16 transportieren.

Der auf der Seite des Auswurftisches 9 gelegene Vertikal-Endlosförderer 12 besitzt eine geringere Höhe als der ihm gegenüberliegende Förderer 13, was einen einfachen und problemlosen Auswerfvorgang nach erfolgter Betäubung gewährleistet. Wird nämlich das jeweilige Tier nach erfolgter Betäubung durch die beiden Förderer 12, 13 weiter angehoben, so kippt es aufgrund der unterschiedlichen Höhe der Förderer über den Förderer 12 geringerer Höhe und gelangt damit auf den Fesseltisch 9.

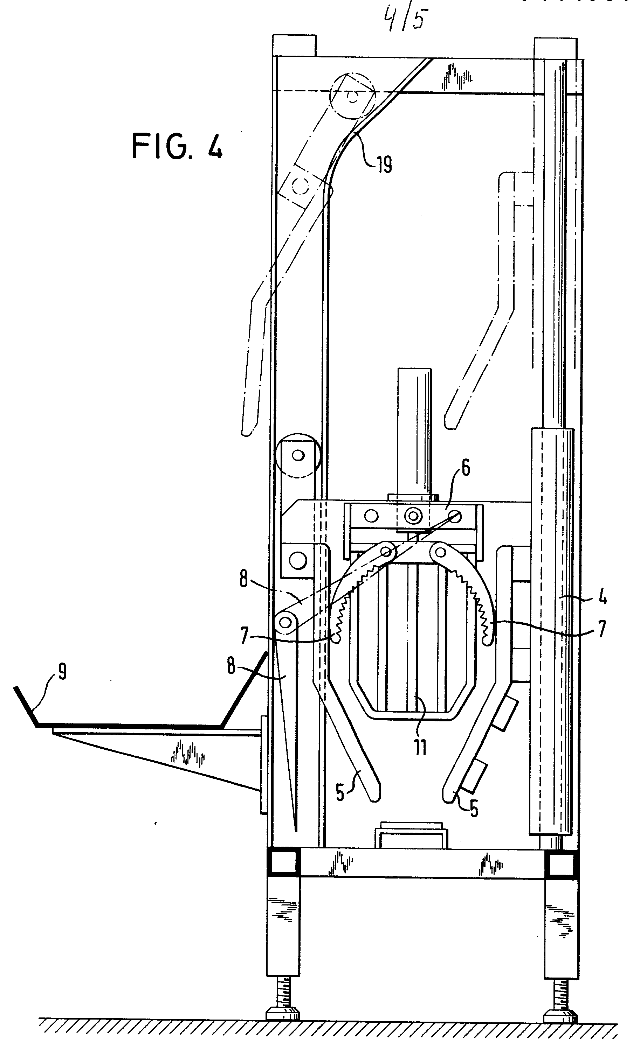

Die in Fig. 4 gezeigte, besonders vorteilhafte Ausführungsvariante der Erfindung unterscheidet sich von der Ausführungsform nach Fig. 2 insbesondere dadurch, daß die Halteklappen 5 nicht mehr ortsfest, sondern vielmehr an der Hubvorrichtung 4 angebracht sind und somit das jeweilige Tier gleich nach dessen Eintrieb in die Falle erfassen.

Der Betäubungsschlitten 6 mit den Elektroden 7 kann in der Weise verfahren werden, daß die Betäubung unmittelbar nach der Erfassung des Tieres durch die Halteklappen durchgeführt wird, worauf dann mittels der Hubvorrichtung 4 das Anheben des betäubten Tieres erfolgt und schließlich der Auswerfvorgang durchgeführt wird.

Dieser Auswerfvorgang wird dadurch ermöglicht, daß nach dem Hochfahren der Klappenanordnung 5 die Auswurfklappe 8 in den Fallenraum geschwenkt wird und dort eine Schrägrutschfläche bildet, auf die das betäubte Tier fällt, wenn die Klappenanordnung 5 geöffnet wird. Über die Schrägrutschfläche gelangt dann das Tier unmittelbar auf den Fesseltisch 9.

Das Öffnen der Klappenanordnung 5 erfolgt bevorzugt dadurch, daß im oberen Hubbereich eine Klappe über eine Klappensteuerkurve 19 nach außen geschwenkt und dadurch das jeweilige Tier freigegeben wird.

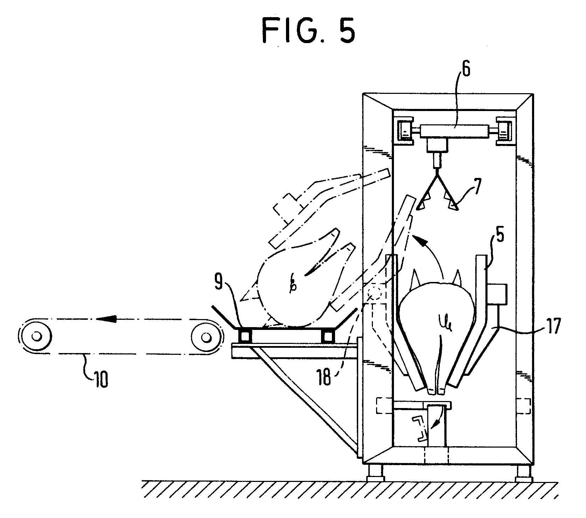

Bei der in Fig. 5 gezeigten Ausgestaltung der Erfindung wird in gleicher Weise wie bei der Variante nach Fig. 4 das jeweilige Tier unmittelbar nach dem Eintreiben in die Falle mittels der Klappenanordnung 5 erfaßt. Der Betäubungsvorgang wird in der bereits beschriebenen Weise mittels der Elektroden 7 des Betäubungsschlittens durchgeführt.

Die Besonderheit dieser Lösung besteht darin, daß die Klappenanordnung 5 kippbar ausgebildet ist, wodurch es möglich wird, das betäubte Tier unmittelbar rücklings auf den Fesseltisch 9 zu transportieren. Die Kippeinheit, die mit einer Hubeinheit kombiniert sein kann, ist mit dem Bezugszeichen 17 gekennzeichnet, und es ist zu sehen, daß die gesamte Klappenanordnung 5 zusammen mit dem sich dazwischen befindenden Tier um die im Rahmen angebrachte horizontale Achse 18 geschwenkt werden kann. Im letzten Bereich des Schwenkvorgangs kann ggf. zusätzlich ein Öffnen der Klappenanordnung erfolgen, was aber aufgrund der Formgestaltung der Klappenanordnung nicht zwingend notwendig ist und vorzugsweise auch nicht benötigt wird.

Alle beschriebenen Ausführungsformen der Erfindung zeichnen sich aus durch einen geringen Platzbedarf, der eine Montage praktisch in jeder vorhandenen Betäubungsbucht oder anstelle einer herkömmlichen Schweinefalle ermöglicht, durch einfache, von einer Person zu leistende Bedienbarkeit, durch Vermeidung jeder unnötigen Tierquälerei und durch vergleichsweise geringe Kosten.

0114063

Bezugszeichenliste zu R 2394
_____

1    Treibgang
2    Fallentür
3    Fallenboden
4    Hubvorrichtung
5    Halteklappen
6    Betäubungsschlitten
7    Elektroden
8    Auswurfklappe
9    Fesseltisch
10   Entblute-Wanderrost
11   Gitterwand
12   Vertikal-Endlosförderer
13   Vertikal-Endlosförderer
14   Mitnehmer
15   Falle
16   Betäubungsstation
17   Hub- und/oder Kippeinheit
18   Kippachse
19   Klappensteuerkurve

0114063

Anlage zur Betäubung von Schweinen

- Patentansprüche -

1. Anlage zur Betäubung von Schweinen, bestehend aus einer auf einen Treibgang folgenden, zur taktweisen Aufnahme von Schweinen bestimmten Falle sowie einer an den Kopf des jeweiligen Schweines anlegbaren Elektrodenanordnung, dadurch g e k e n n z e i c h - n e t , daß in der Falle (15) eine die einzeln eingeschleusten Schweine erfassende Klappen- oder Mitnehmeranordnung (5;14) sowie eine Betäubungsstation (16) mit bezüglich des Schweinekopfes zentrier- und insbesondere sensorgesteuert am Kopf anlegbaren Elektroden (7) vorgesehen sind, und daß das betäubte

0114063

Schwein mittels einer Auswurfeinheit (8; 12, 13; 17) zu einem seitlich der Falle und in normaler Arbeitshöhe angeordneten Fesseltisch (9) bzw. einem Entblute-Wanderrost (10) überführbar ist.

2. Anlage nach Anspruch 1, dadurch g e k e n n - z e i c h n e t , daß die Klappenanordnung (5) zwischen einer Erfassungsposition im Bereich des Fallenbodens (3) und einer Auswerfposition oberhalb von Fesseltisch (9) bzw. Entblute-Wanderrost (10) verfahrbar ist.

3. Anlage nach Anspruch 2, dadurch g e k e n n - z e i c h n e t , daß die Klappenanordnung (5) mit einer Hub- und/oder Kippvorrichtung (4; 17) verbunden ist.

4. Anlage nach Anspruch 1, dadurch g e k e n n - z e i c h n e t , daß die Klappenanordnung (5) ortsfest und der Boden (3) der Falle (15) anheb- und absenkbar ausgebildet ist.

5. Anlage nach einem der Ansprüche 1 bis 4, dadurch g e k e n n z e i c h n e t , daß zwischen dem unteren Aufnahmebereich der Falle (15) und der sich darüber befindenden Betäubungsstation (16) eine an der Fallenwand angelenkte und unter Ausbildung einer Schrägrutsche in den Fallenraum einschwenkbare Auswurfklappe (8) vorgesehen ist.

6. Anlage nach Anspruch 3, dadurch g e k e n n - z e i c h n e t , daß die Klappenanordnung (5) über eine seitliche Kippachse (18) aus ihrer fallenbodenseitigen Erfassungsposition aus dem Fallenraum in eine Position oberhalb des Fesseltisches (9) verschwenkbar ist.

7. Anlage nach einem der Ansprüche 1 bis 3 und 5, dadurch g e k e n n z e i c h n e t , daß die Klappenanordnung (5) mittels einer Vorrichtung (4) vertikal verfahrbar und am Ende des Vertikalhubs in eine Öffnungsstellung überführbar ist.

8. Anlage nach Anspruch 3, dadurch g e k e n n z e i c h - n e t , daß die die Klappenanordnung (5) bildenden Halteklappen einen der Tierkörperform angepaßten oder sich der Tierkörperform anpassenden Aufbau besitzen.

9. Anlage nach Anspruch 1, dadurch g e k e n n z e i c h - n e t , daß die Elektroden (7) verstellbar an einem Betäubungsschlitten (6) angebracht und horizontal sowie vertikal verfahrbar sind.

10. Anlage nach Anspruch 9, dadurch g e k e n n z e i c h - n e t , daß die Bewegung der Elektroden (7) durch eine Abtastvorrichtung in Abhängigkeit von der Kopfposition des Schweines gesteuert ist und daß die elektrische Zuschaltung der Elektroden (7) in Abhängigkeit vom Ergebnis einer Messung des Widerstandes zwischen den mit einstellbarem Druck am Schweinekopf anliegenden Elektroden erfolgt.

11. Anlage nach Anspruch 1, dadurch g e k e n n z e i c h - n e t , daß zwischen dem Fallenboden (3) und der Betäubungsstation (16) ein Förderer vorgesehen ist, der aus zwei die Seitenwände der Falle (15) bildenden und mit gegenseitig ausgerichteten, den Schweinekörper untergreifenden Mitnehmern (14) versehenen Vertikal-Endlosförderern (12, 13) besteht.

12. Anlage nach Anspruch 11, dadurch g e k e n n - z e i c h n e t , daß der auf der Seite des Auswurftisches (9) gelegene Vertikal-Endlosförderer (12) eine geringere Höhe als der ihm gegenüberliegende Endlosförderer (13) aufweist.

13. Anlage nach Anspruch 11, dadurch g e k e n n -
z e i c h n e t , daß die beiden zueinander parallelen Vertikal-Endlosförderer (12, 13) gleiche Höhe aufweisen, jedoch bezüglich der Vertikalen geneigt angeordnet sind.

# FIG.1

FIG. 2

FIG.3

FIG. 4

0114063

4/5

FIG. 5